# EUROPEAN PATENT SPECIFICATION

(11) **EP 2 512 165 B1**
(45) Date of publication and mention of the grant of the patent: **20.04.2016**
(21) Application number: 10837581.7
(22) Date of filing: 14.12.2010
(51) Int. Cl.: H04W 8/26, H04W 16/32, H04W 84/04, H04W 88/08, H04W 92/20

(54) **MOBILE COMMUNICATION SYSTEM AND RADIO BASE STATION**
MOBILES KOMMUNIKATIONSSYSTEM UND FUNKBASISSTATION
SYSTÈME DE COMMUNICATION MOBILE ET STATION DE BASE RADIO

(30) Priority: 14.12.2009 JP 2009283071; 01.10.2010 JP 2010224070
(43) Date of publication of application: 17.10.2012
(73) Proprietor: NTT DOCOMO, INC., Chiyoda-ku Tokyo 100-6150 (JP)
(72) Inventor: TAKAHASHI, Hideaki, Tokyo 100-6150 (JP); HAPSARI, Wuri Andarmawanti, Tokyo 100-6150 (JP); UMESH, Anil, Tokyo 100-6150 (JP); IWAMURA, Mikio, Tokyo 100-6150 (JP); ISHII, Minami, Tokyo 100-6150 (JP)
(74) Representative: Hoffmann Eitle
(86) International application number: PCT/JP2010/072425
(87) International publication number: WO 2011/074555

(56) References cited:
- EP-A2- 1 919 234
- WO-A1-03/039037
- WO-A1-2009/077418
- US-A1- 2006 046 645
- US-A1- 2009 111 476
- US-A1- 2009 156 214
- VODAFONE: 'Definition of Cell Identity and CSG identity for SIB1' 3GPP TSG RAN WG2 #62BIS R2-083249, [Online] 30 June 2008, XP050141102 Retrieved from the Internet: <URL:http://www.3gpp.org/ftp/tsg_ran/WG2_RL 2/TSGR2_ 62bis/Docs/R2-083249.zip> [retrieved on 2011-03-03]

## Description

### TECHNICAL FIELD

The present invention relates to a mobile communication system and a radio base station.

### BACKGROUND ART

An LTE (Long Term Evolution)-Advanced mobile communication system that is the next generation of an LTE scheme is configured to enable the provision of a relay node (RN) between a radio base station DeNB (Doner-eNB) and a mobile station UE.

The radio base station eNB in an LTE mobile communication system establishes an "X2 interface" with an adjacent radio base station eNB and thereby enables exchange of load information of the radio base station eNB or a handover control signal without passing through a mobile switching center MME.

However, when the relay node RN establishes an "X2 interface" with all the adjacent radio base stations eNB in an operating form in which a large number of relay nodes RN are installed, subordinate to the radio base station DeNB, there is a risk that the processing load on the radio base station eNB may increase.

Consequently, a method has been proposed in which the radio base station DeNB concentrates the "X2 interface" with the subordinate relay nodes RN, and the radio base station DeNB establishes an "X2 interface" with the adjacent radio base stations eNB without dependence on the number of the subordinate relay nodes RN.

WO 2009/077418 A1 relates to an identification of relay base stations in wireless networks. It is provided a solution for assigning to a relay node of a wireless telecommunication system an identifier from which a corresponding identifier of a central node associated with the relay node is derivable according to a determined rule.

### SUMMARY OF THE INVENTION

### PROBLEMS TO BE SOLVED BY THE INVENTION

However, in the resulting mobile communication system, it is necessary to recognize the cells subordinate to the relay node RN as one cell subordinate to the radio base station DeNB with respect to adjacent radio base stations eNB in order for the radio base station DeNB to concentrate the "X2 interface", and it is necessary to assign an identifier for identifying the relay node RN as a radio base station DeNB and an identifier for identifying the cell subordinate to the relay node RN in association with the radio base station DeNB. However, there is no method for the relay node RN to automatically assign the identifier in coordination with the radio base station DeNB, and there has been a problem that a person installing the relay node RN must manually set the identifier.

Therefore, the present invention has been achieved in view of the above problems, and an object thereof is to provide a mobile communication system and a radio base station, by which it is possible to enable automatic assignment of an identifier to be set in the radio base station that is connected to the relay node in coordination with the relay node and the radio base station.

### MEANS FOR SOLVING THE PROBLEM

The object is solved by the features of the independent claims. Preferred embodiments are described in the dependent claims. A first example is summarized in that a mobile communication system comprising a radio base station and a relay node connected to the radio base station, in which device identification information that identifies the relay node and device identification information that identifies the radio base station are configured to be identical, and the radio base station includes an assignment unit configured to assign, at activation of the relay node, the cell identification information that identifies the cell subordinate to the relay node to avoid overlap with the cell identification information that is used as cell identification information that identifies the cell subordinate to the radio base station and cells subordinate to the other relay nodes that are connected to the radio base station.

A second example is summarized in that a radio base station connected to a relay node, in which device identification information that identifies the relay node and device identification information that identifies the radio base station are configured to be identical, and an assignment unit is provided that is configured to assign, at activation of the relay node, cell identification information that identifies a cell subordinate to the relay node to avoid overlap with cell identification information that is used as cell identification information that identifies a cell subordinate to the radio base station and cells subordinate to the other relay nodes that are connected to the radio base station.

### EFFECTS OF THE INVENTION

As has been described above, according to the present invention, it is possible to provide a mobile communication system and a radio base station, by which it is possible to enable automatic assignment of an identifier to be set in the radio base station that is connected to the relay node in coordination with the relay node and the radio base station.

### BRIEF DESCRIPTION OF THE DRAWINGS

[Fig. 1] Fig. 1 is a diagram showing the entire configuration of a mobile communication system according to a first embodiment of the present invention.
[Fig. 2] Fig. 2 is a functional block diagram of the relay node RN according to the first embodiment of the present invention.
[Fig. 3] Fig. 3 is a functional block diagram of a radio base station DeNB according to the first embodiment of the present invention.
[Fig. 4] Fig. 4 is a sequence diagram illustrating an operation of the mobile communication system according to the first embodiment of the present invention.
[Fig. 5] Fig. 5 is a flowchart describing the operation of the relay node RN according to the first embodiment of the present invention.
[Fig. 6] Fig. 6 is a flowchart describing the operation of the relay node RN according to a second embodiment of the present invention.

### BEST MODES FOR CARRYING OUT THE INVENTION

### (Mobile communication system according to first embodiment of the present invention)

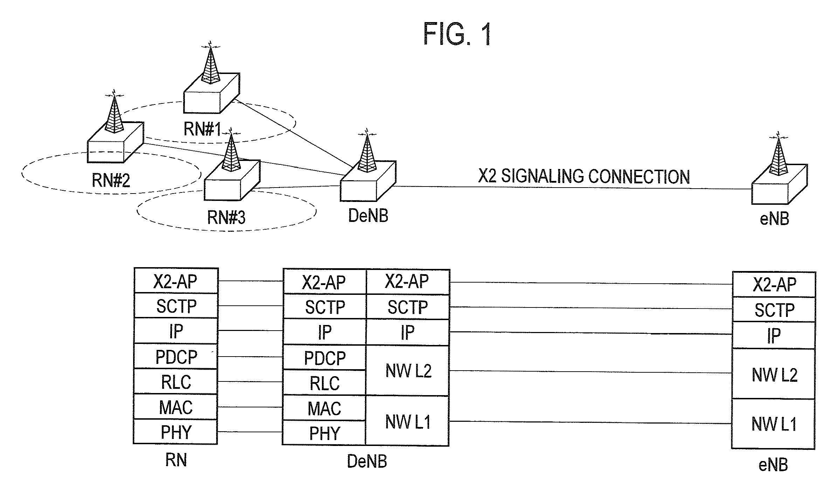

The mobile communication system according to the first embodiment of the present invention is described with reference to Fig. 1 through Fig. 5.

As illustrated in Fig. 1, the mobile communication system according to the present embodiment is an LTE-Advanced mobile communication system that includes a radio base station eNB, a radio base station DeNB, and a plurality of relay nodes RN#1 to RN#3 connected to the radio base station DeNB. The relay nodes RN#1 to RN#3 are denoted representatively as "relay node RN" in the following description.

Fig. 1 illustrates a C-plane protocol stack in the mobile communication system according to the present embodiment.

As illustrated in Fig. 1, the protocol functions of the C-plane in the relay node RN include a physical (PHY) layer function, a MAC (Media Access Control) layer function, an RLC (Radio Link Control) layer function, an IP (Internet Protocol) layer function, an SCTP (Stream Control Transmission Protocol) layer function, and an X2-AP (X2-Application) layer function.

The C-plane protocol functions in the radio base station DeNB on the relay node RN side include the physical (PHY) layer function, the MAC layer function, the RLC layer function, the PDCP layer function, the IP layer function, the SCTP layer function, and the X2-AP layer function.

Further, the C-plane protocol functions in the radio base station DeNB on the radio base station eNB side include an NWL1 (Network Layer 1) function, an NWL2 (Network Layer 2) function, the IP layer function, the SCTP layer function, and the X2-AP layer function.

The C-plane protocol functions in the radio base station eNB include the NWL1 function, the NWL2 function, the IP layer function, the SCTP layer function, and the X2-AP layer function.

As illustrated in Fig. 1, an X2 connection (X2 signaling connection) is terminated between the X2-AP layer function of the relay node RN and the X2-AP relay function of the radio base station DeNB, and an X2 connection is terminated between the X2-AP layer function of the radio base station DeNB and the X2-AP relay function of the radio base station eNB.

A configuration is possible in which only one X2 connection is provided between the radio base station DeNB and the radio base station eNB without reference to the number of relay nodes RN connected to the radio base station DeNB.

An S1 connection for the relay node RN is terminated between the relay node RN and the mobile switching center MME (Mobility Management Entity), and terminated between the relay node RN and the radio base station DeNB.

The radio base station eNB is configured to recognize a cell subordinate to the relay node RN as a cell subordinate to the radio base station DeNB without making a distinction between the relay node RN and the radio base station DeNB.

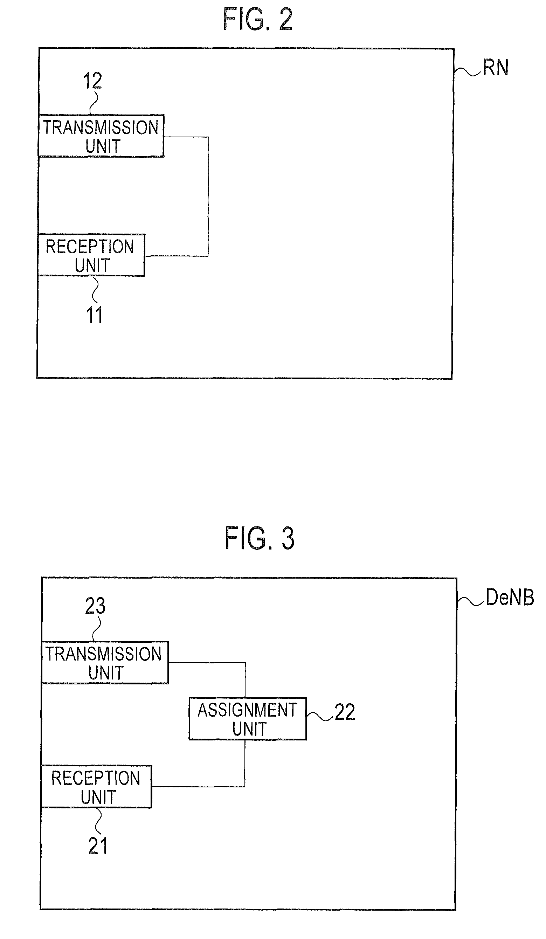

As illustrated in Fig. 2, the relay node RN includes a reception unit 11 and a transmission unit 12.

The reception unit 11 is configured to receive various types of signals from the radio base station DeNB through the X2 connection.

The transmission unit 12 is configured to transmit various types of signals through the X2 connection to the radio base station DeNB.

The relay node RN is configured to use "Cell Identity" that is assigned by the radio base station DeNB and the same "Macro eNB ID" as the radio base station DeNB.

For example, the "Cell Identity" is 28-bit identification information for identification of a cell subordinate to the relay node RN, and is configured by "Macro eNB ID (20 bits)" that is used by the relay node RN and "ID (8 bits)" that enables unique identification of a cell in the relay node or the radio base station DeNB in which the "Macro eNB ID" is used.

For example, the transmission unit 12 may be configured to notify, at activation of the relay node RN, the radio base station DeNB of the number of cells operated in the relay node RN by using "RRC RN (UE) Capability Information".

Alternatively, the transmission unit 12 may be configured to notify, at activation of the relay node RN, the radio base station DeNB of the number of cells that can be supported in the relay node RN by using "RRC RN (UE) Capability Information".

As illustrated in Fig. 3, the radio base station DeNB includes a reception unit 21, an assignment unit 22 and a transmission unit 23.

The reception unit 21 is configured to receive various types of signals from the relay node RN through the X2 connection.

The transmission unit 23 is configured to transmit various types of signals through the X2 connection to the relay node RN.

The assignment unit 22 is configured to assign, at activation of the relay node RN, "Cell Identity" that identifies a cell subordinate to the relay node RN.

For example, the assignment unit 22 is configured to assign, at activation of the relay nodes RN#1, the "Cell Identity" that identifies a cell subordinate to the relay node RN to avoid overlap with the "Cell Identity" that is used as the "Cell Identity" for identification of a cell subordinate to the radio base station DeNB and cells subordinate to other relay nodes RN#2 and RN#3 that are connected to the radio base station DeNB.

Specifically, the assignment unit 22 is provided so that the "ID (8 bits)" in the "Cell Identity" assigned to the cell subordinate to the relay node RN#1 does not overlap with the "ID (8 bits)" in the "Cell Identity" assigned to the cell subordinate to the radio base station DeNB and the cells subordinate to the relay nodes RN#2 and RN#3.

It is noted that, as described below, the assignment unit 22 is configured to assign "Cell Identity" that identifies the cell subordinate to the relay node RN in a setting process for the RRC connection between the relay node RN and the radio base station DeNB.

When the reception unit 21 has received a number of cells operated in the relay node RN at activation of the relay node RN, the assignment unit 22 may be configured to assign the above-described "Cell Identities" by as much as only the number of notified cells.

Alternatively, when the reception unit 21 has received a number of cells that can be supported in the relay node RN at activation of the relay node RN, the assignment unit 22 may be configured to assign the above-described "Cell Identities" by as much as a number less than or equal to the number of notified cells.

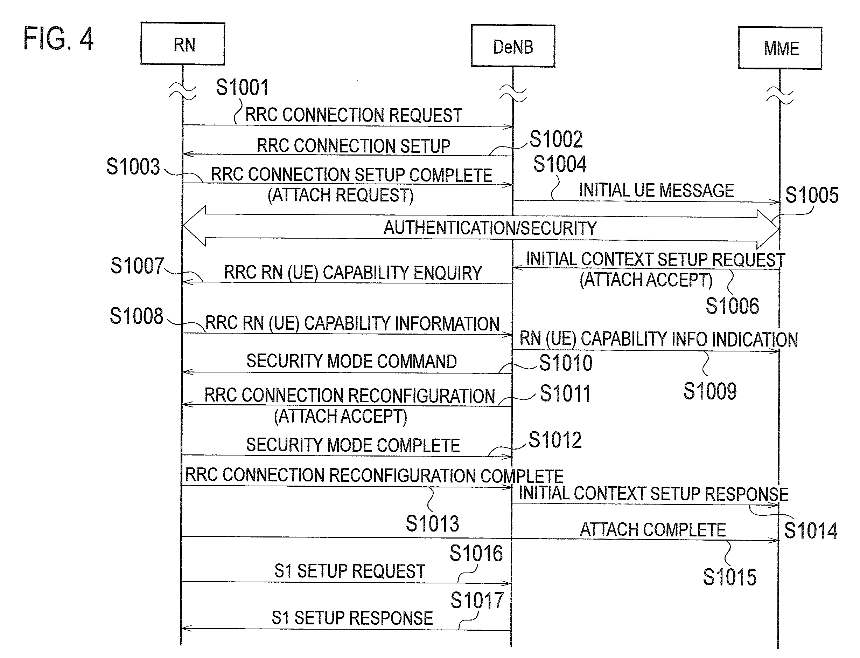

The operation at activation of the relay node RN in the mobile communication system according to the first embodiment of the present invention will be described below making reference to Fig. 4.

The relay node RN can acquire "Cell Identity" that identifies the cell by receiving SIB1 (System Information Block 1) that is broadcast in a cell subordinate to the radio base station DeNB, and can know the "Macro eNB ID (upper 20 bits of the "Cell Identity") of the radio base station DeNB.

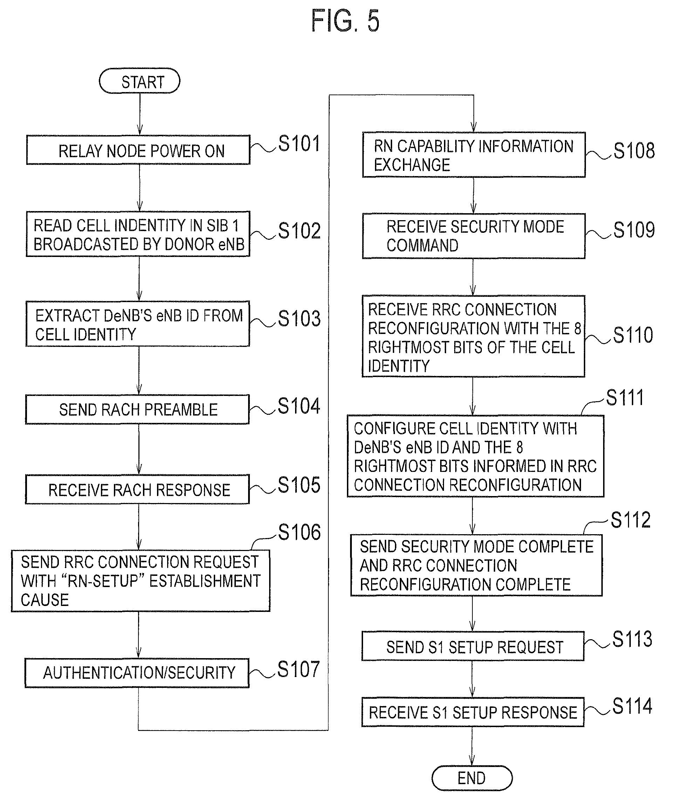

As illustrated in Fig. 5, in step S1001, the relay node RN transmits "RRC Connection Request" that notifies the radio base station DeNB that the "Establishment cause" is "RN activation".

In step S1002, the radio base station DeNB transmits "RRC Connection Setup" to the relay node RN.

In step S1003, the relay node RN transmits "RRC Connection Setup Complete" including "Attach Request" to the radio base station DeNB.

In step S1004, the radio base station DeNB transmits "Initial UE Message" including the "Attach Request" to the mobile switching center MME.

In step S1005, "Authentication/Security process" is performed between the relay node RN and the mobile switching center MME.

In step S1006, the mobile switching center MME transmits "Initial Context Setup Request" including the "Attach Accept" to the radio base station DeNB.

In step S1007, the radio base station DeNB transmits "RRC RN (UE) Capability Enquiry" to the relay node RN.

In step S1008, the relay node RN transmits "RRC RN (UE) Capability Information" to the radio base station DeNB.

The relay node RN may use the "RRC RN (UE) Capability Information" to notify the number of cells operated in the relay node RN or the number of cells supportable in the relay node RN to the radio base station DeNB.

In step S1009, the radio base station DeNB transmits "RRC RN (UE) Capability Indication" to the mobile switching center MME.

The radio base station DeNB transmits "Security Mode Command" to the relay node RN in step S1010, and transmits "RRC Connection Reconfiguration" including the "Attach Accept" to the relay node RN in step S1011.

Here, the radio base station DeNB uses the "RRC Connection Reconfiguration" to notify the relay node RN of one or a plurality of "Cell Identity" (specifically, an 8-bit "ID") that have been assigned to the cell subordinate to the relay node RN.

The relay node RN transmits "Security Mode Complete" to the radio base station DeNB in step S1012, and transmits "RRC Connection Reconfiguration Complete" to the radio base station DeNB in step S1013.

In step S1014, the radio base station DeNB transmits "Initial Context Setup Response" to the mobile switching center MME.

In step S1015, the relay node RN transmits "Attach Complete" to the mobile switching center MME.

Thereafter, a setting process for the relay node RN is performed. Specifically, the relay node RN transmits "S1 Setup Request" to the radio base station DeNB in step S1016, and then receives "S1 Setup Response" from the radio base station DeNB in step S1017.

Next, the operation of the relay node RN according to this embodiment will be described making reference to Fig. 5.

As illustrated in Fig. 5, when the power source is applied in step S101, the relay node RN acquires the "Cell Identity" included in the SIB1 that has been broadcast in the cell subordinate to the radio base station DeNB in step S102, and extracts the "Macro eNB ID" of the radio base station DeNB from the "Cell Identity" in step S103.

In step S105, the relay node RN transmits "RACH (Random Access Channel) preamble" to the radio base station DeNB, and receives "RACH response" from the radio base station DeNB in step S106.

In the step S106, the relay node RN uses a radio resource assigned by the "RACH response" to transmit the "RRC Connection Request" with "rn-Setup" set to the "Establishment cause", that is to say, "RRC Connection Request" that notifies that the "Establishment cause" is "RN activation".

In step S107, the relay node RN performs the "Authentication/Security process" in between with the mobile switching center MME.

In step S108, the relay node RN transmits the "RRC RN (UE) Capability Information" to the radio base station DeNB, and in step S109, receives the "Security Mode Command" from the radio base station DeNB.

In step S110, the relay node RN receives "RRC Connection Reconfiguration" that assigns the above-described "ID" that should be set to the lower 8 bits of the "Cell Identity", from the radio base station DeNB.

In step S111, the relay node RN uses the above-described "Macro eNB ID" and the "ID" included in the received "RRC Connection Reconfiguration" to set the "Cell Identity" of the cell subordinate to the relay node RN.

In step S112, the relay node RN transmits the "Security Mode Complete" and the "RRC Connection Reconfiguration Complete" to the radio base station DeNB.

In step S113, the relay node RN transmits the "S1 Setup Request" to the radio base station DeNB, and in step S114, receives the "S1 Setup Response" from the radio base station DeNB.

According to the mobile communication system in the first embodiment of the present invention, the "Macro eNB ID" that identifies the relay node RN and the "Macro eNB ID" that identifies the radio base station DeNB are configured to be identical, and the lower 8 bits of the "Cell Identity" that identifies the cell subordinate to the other relay nodes RN connected to the radio base station DeNB and the cell subordinate to the radio base station DeNB, and the lower 8 bits of the "Cell Identity" that identifies the cell subordinate to the relay node RN are configured not to overlap. Thus, setting of one X2 connection may suffice without reference to the number of relay nodes RN that are connected to the radio base station DeNB, and the radio base station eNB can recognize, as the cell subordinate to the radio base station DeNB, the cell subordinate to the relay node RN, without making a distinction between the relay node RN and the radio base station DeNB.

(Mobile communication system according to second embodiment of present invention)

The following is a description of a mobile communication system according to the second embodiment of the present invention focusing on the points of difference from of the mobile communication system according to the first embodiment of the present invention.

In the mobile communication system according to the present embodiment, an assignment unit 22 of a radio base station DeNB is configured to assign "Cell Identity" that identifies the cell subordinate to a relay node RN, in the setting process for an S1 connection of the relay node RN.

Specifically, in substitution of use of the "RRC Connection Reconfiguration" in step S1011 in Fig. 4 for notification of the "Cell Identity (specifically, an 8-bit "ID") assigned to the cell subordinate to the relay node RN, in step S1017 in Fig. 4, the radio base station DeNB uses the "S1 Setup Response" to notify the "Cell Identity (specifically, the 8-bit "ID")" that has been assigned to the cell subordinate to the relay node RN.

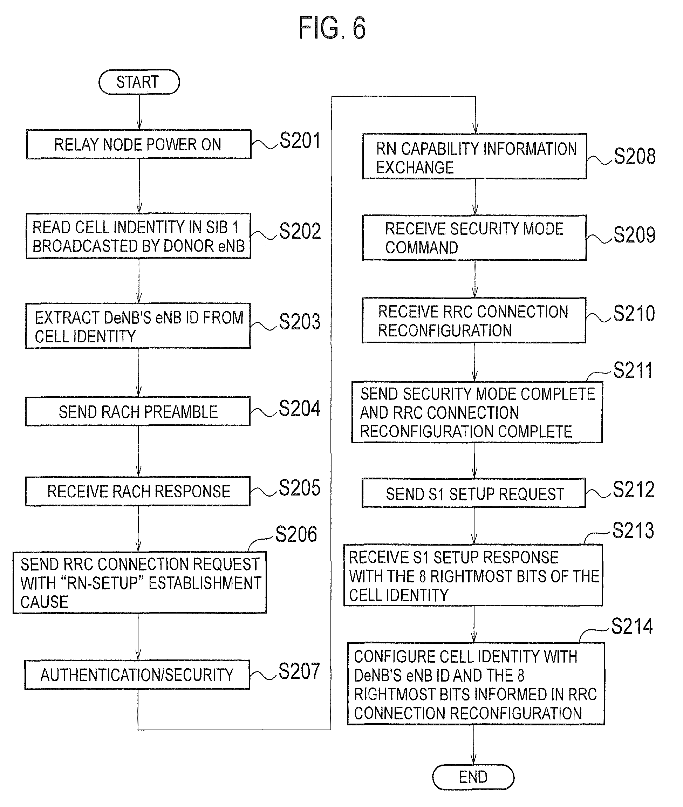

The operation of the relay node RN according to the present embodiment will be described below making reference to Fig. 6.

As illustrated in Fig. 6, the operation from step S201 to step S209 is the same as the operation from the step S101 to the step S109 in Fig. 5.

In step S210, the relay node RN receives "RRCConnection Reconfiguration" from the radio base station DeNB.

In step S211, the relay node RN transmits "RRC Connection Reconfiguration Complete" and "Security Mode Complete" to the radio base station DeNB.

The relay node RN transmits "S1 Setup Request" to the radio base station DeNB in step S212, and then receives "S1 Setup Response" that assigns the above-described "ID" that should be set to the lower 8 bits of the "Cell Identity", from the radio base station DeNB in step S213.

In step S214, the relay node RN uses the above-described "Macro eNB ID" and the "ID" included in the received "S1 Setup Response" to set the "Cell Identity" for the cell subordinate to the relay node RN.

The characteristics of the present embodiment as described above may be expressed as follows.

A first characteristic of the present embodiment is summarized as a mobile communication system provided with a radio base station DeNB and a relay node RN connected to the radio base station DeNB, wherein the "Macro eNB ID (device identification information)" that identifies the relay node RN and the "Macro eNB ID" that identifies the radio base station DeNB are configured to be identical, and the radio base station DeNB includes an assignment unit 22 configured to assign, at activation of the relay node RN, the "Cell Identity (specifically, the 8-bit "ID" described above)" that identifies the cell subordinate to the relay node RN to avoid overlap with the "Cell Identity" that is used as the "Cell Identity (cell identification information)" that identifies the cell subordinate to the radio base station DeNB and cells subordinate to the other relay node RN that are connected to the radio base station DeNB.

In the first characteristic of the present embodiment, the assignment unit 22 may be configured to assign the "Cell Identity" that identifies the cell subordinate to the relay node RN in the setting process for the RRC connection between the relay node RN and the radio base station DeNB at activation of the relay node RN.

In the first characteristic of the present embodiment, the assignment unit 22 may be configured to assign the "Cell Identity" that identifies the cell subordinate to the relay node RN in the setting process for the S1 connection of the relay node RN at activation of the relay node RN.

In the first characteristic of the present embodiment, the relay node RN may include a transmission unit 12 configured to notify, at activation, the radio base station DeNB of the number of cells operating in the relay node RN, and the assignment unit 22 may be configured to assign the above-described "Cell Identities" by as much as the number of notified cells.

In the first characteristic of the present embodiment, the relay node RN may include the transmission unit 12 configured to notify, at activation, the radio base station DeNB of the number of cells that can be supported by the relay node RN, and the assignment unit 22 may be configured to assign the above-described "Cell Identities" by as much as a number less than or equal to the number of notified cells.

A second characteristic of the present embodiment is summarized as a radio base station DeNB connected to the relay node RN, wherein the "Macro eNB ID" that identifies the relay node RN and the "Macro eNB ID" that identifies the radio base station DeNB are configured to be identical, and the radio base station DeNB includes the assignment unit 22 configured to assign, at activation of the relay node RN, the "Cell Identity" that identifies the cell subordinate to the relay node RN to avoid overlap with the "Cell Identity" that is used as the "Cell Identity" that identifies a cell subordinate to the radio base station DeNB and cells subordinate to the other relay node RN that are connected to the radio base station DeNB.

In the second characteristic of the present embodiment, the assignment unit 22 may be configured assign the "Cell Identity" that identifies the cell subordinate to the relay node RN in the setting process for the RRC connection between the relay node RN and the radio base station DeNB at activation of the relay node RN.

In the second characteristic of the present embodiment, the assignment unit 22 may be configured to assign the "Cell Identity" that identifies the cell subordinate to the relay node RN in the setting process for the S1 connection of the relay node RN at activation of the relay node RN.

In the second characteristic of the present embodiment, configuration may be such that there is provided a reception unit 21 configured to receive, at activation of the relay node RN, the number of cells operating in the relay node RN, and the assignment unit 22 assigns the above-described "Cell Identities" by as much as only the number of notified cells.

In the second characteristic of the present embodiment, configuration may be such that there is provided the reception unit 21 configured to receive, at activation of the relay node RN, the number of cells that can be supported in the relay node RN, and the assignment unit 22 assigns the above-described "Cell Identities" by as much as a number less than or equal to the number of notified cells.

It is noted that the operation of the above-described the mobile switching center MME, the radio base station DeNB, the relay node RN or the mobile station UE may be implemented by a hardware, may also be implemented by a software module executed by a processor, and may further be implemented by the combination of the both.

The software module may be arranged in a storage medium of an arbitrary format such as RAM(Random Access Memory), a flash memory, ROM (Read Only Memory), EPROM (Erasable Programmable ROM), EEPROM (Electronically Erasable and Programmable ROM), a register, a hard disk, a removable disk, and CD-ROM.

The storage medium is connected to the processor so that the processor can write and read information into and from the storage medium. Such a storage medium may also be accumulated in the processor. The storage medium and processor may be arranged in ASIC. Such the ASIC may be arranged in the mobile switching center MME, the radio base station DeNB, the relay node RN or the mobile station UE. Further, such a storage medium or a processor may be arranged, as a discrete component, in the mobile switching center MME, the radio base station DeNB, the relay node RN or the mobile station UE.

Thus, the present invention has been explained in detail by using the above-described embodiments; however, it is obvious that for persons skilled in the art, the present invention is not limited to the embodiments explained herein. The present invention can be implemented as a corrected and modified mode without departing from the gist and the scope of the present invention defined by the claims. Therefore, the description of the specification is intended for explaining the example only and does not impose any limited meaning to the present invention.

### Industrial Applicability

As described above, in accordance with the present invention, it is possible to provide a mobile communication system and a radio base station, by which it is possible to enable automatic assignment of an identifier to be set in the radio base station that is connected to the relay node in coordination with the relay node and the radio base station.

### EXPLANATION OF NUMERALS

- MME: mobile switching center
- RN: relay node
- 11: reception unit
- 12: transmission unit
- DeNB: radio base station
- 21: reception unit
- 22: assignment unit
- 23: transmission unit

## Claims

1. A mobile communication system comprising a radio base station and a relay node (RN) connected to the radio base station (DeNB), wherein
the relay node (RN) is **characterized in that** it is configured to use
- a Macro eNB ID that identifies the relay node (RN) and that is identical to the Macro eNB ID that identifies the radio base station (DeNB) and
- an ID that can uniquely identify a cell in the radio base station (DeNB) or in the relay node (RN)
to set a Cell Identity that identifies a cell subordinate to the relay node (RN).

2. The mobile communication system according to claim 1, wherein,
the radio base station (DeNB) comprises an assignment unit (22) configured to assign, at activation of the relay node (RN), the Cell Identity that identifies a cell subordinate to the relay node (RN) to avoid overlap with a Cell Identity that identifies cells subordinate to other relay nodes connected to the radio base station (DeNB) and a Cell Identity used as a Cell Identity that identifies a cell subordinate to the radio base station (DeNB).

3. The mobile communication system according to claim 2, wherein,
the assignment unit (22) is configured to assign the Cell Identity that identifies a cell subordinate to the relay node (RN) in a setting process for an RRC connection between the relay node (RN) and the radio base station (DeNB) at activation of the relay node (RN).

4. The mobile communication system according to claim 2, wherein,
the assignment unit (22) is configured to assign the Cell Identity that identifies a cell subordinate to the relay node (RN) in a setting process for an S1 connection of the relay node (RN) at activation of the relay node (RN).

5. The mobile communication system according to claim 2, wherein,
the relay node (RN) comprises a transmission unit (23) configured to notify, at activation, the radio base station (DeNB) of the number of cells operating in the relay node (RN), and
the assignment unit (22) is configured to assign the Cell Identities by as much as the number of the notified cells.

6. The mobile communication system according to claim 2, wherein,
the relay node (RN) comprises a transmission unit (23) configured to notify, at activation, the radio base station (DeNB) of the number of cells that can be supported in the relay node (RN), and
the assignment unit (22) is configured to assign the Cell Identity by as much as a number less or equal to the number of the notified cells.

7. A radio base station (DeNB) connected to a relay node (DeNB), **characterized by** an assignment unit (22) configured to assign, at activation of the relay node (RN), a Cell Identity that identifies a cell subordinate to the relay node (RN) to avoid overlap with a Cell Identity that identifies cells subordinate to other relay nodes connected to the radio base station (DeNB) and a Cell Identity used as a Cell Identity that identifies a cell subordinate to the radio base station (DeNB), wherein
the Cell Identity that identifies a cell subordinate to the relay node (RN) is configured by
- a Macro eNB ID that identifies the relay node (RN) and that is identical to the Macro eNB ID that identifies the radio base station (DeNB) and
- an ID that can uniquely identify a cell in the radio base station (DeNB) or in the relay node (RN).

8. The radio base station (DeNB) according to claim 7, wherein
the assignment unit (22) is configured to assign the Cell Identity that identifies a cell subordinate to the relay node (RN) in a setting process for an RRC connection between the relay node (RN) and the radio base station (DeNB) at activation of the relay node (RN).

9. The radio base station (DeNB) according to claim 7, wherein
the assignment unit (22) is configured to assign the Cell Identity that identifies a cell subordinate to the relay node (RN) in a setting process for an S1 connection of the relay node (RN) at activation of the relay node (RN).

10. The radio base station (DeNB) according to claim 7, comprising a reception unit (21) configured to receive, at activation of the relay node (RN), the number of cells operating in the relay node (RN), wherein
the assignment unit (22) is configured to assign the Cell Identities by as much as the number of the notified cells.

11. The radio base station (DeNB) according to claim 7, comprising a reception unit (21) configured to receive, at activation of the relay node (RN), the number of cells that can be supported in the relay node (RN), wherein
the assignment unit (22) is configured to assign the Cell Identity by as much as a number less or equal to the number of the notified cells.

12. A relay node (RN) connected to a radio base station (DeNB), wherein
the relay node (RN) is **characterized in that** it is configured to use
- a Macro eNB ID that identifies the relay node (RN) and that is identical to the Macro eNB ID that identifies the radio base station (DeNB) and
- an ID that can uniquely identify a cell in the radio base station (DeNB) or in the relay node (RN)
to set a Cell Identity that identifies a cell subordinate to the relay node (RN).

13. The relay node (RN) according to claim 12, wherein
the relay node (RN) is configured to use the Macro eNB ID acquired via SIB1 broadcast in the cell subordinate to the radio base station (DeNB) and the ID included in a received RRC connection reconfiguration message to set the Cell Identity.

14. The relay node according to claim 12, wherein
the relay node (RN) is configured to use the Macro eNB ID acquired via SIB1 broadcast in the cell subordinate to the radio base station (DeNB) and the ID included in a received S1 setting response message to set the Cell Identity.

## Patentansprüche

1. Mobilkommunikationssystem umfassend eine Funkbasisstation und einen Weiterleitungsknoten (RN), verbunden mit der Funkbasisstation (DeNB), wobei
der Weiterleitungsknoten (RN) **gekennzeichnet ist dadurch**, dass er konfiguriert ist zum Verwenden
- einer Macro eNB ID, welche den Weiterleitungsknoten (RN) identifiziert und, welche identisch ist mit der Macro eNB ID, welche die Funkbasisstation (DeNB) identifiziert und
- eine ID, welche eine Zelle in der Funkbasisstation (DeNB) oder in dem Weiterleitungsknoten (RN) eindeutig identifizieren kann
zum Einstellen einer Zellidentität, welche eine Zelle untergeordnet des Funkweiterleitungsknotens (RN) identifiziert.

2. Mobilkommunikationssystem nach Anspruch 1, wobei
die Funkbasisstation (DeNB) umfasst eine Zuweisungseinheit (22), die konfiguriert ist zum Zuweisen, bei Aktivierung des Weiterleitungsknotens (RN), der Zellidentität, welche eine Zelle untergeordnet des Weiterleitungsknotens (RN) identifiziert, um ein Überlappen mit einer Zellidentität, welche Zellen untergeordnet anderer Weiterleitungsknoten, verbunden mit der Funkbasisstation (DeNB), identifiziert und einer Zellidentität, verwendet als eine Zellidentität, welche eine Zelle untergeordnet der Funkbasisstation (DeNB) identifiziert, zu vermeiden.

3. Mobilkommunikationssystem nach Anspruch 2, wobei
die Zuweisungseinheit (22) konfiguriert ist zum Zuweisen der Zellidentität, welche eine Zelle untergeordnet des Weiterleitungsknotens (RN) identifiziert, in einem Einstellprozess für eine RRC-Verbindung zwischen dem Weiterleitungsknoten (RN) und der Funkbasisstation (DeNB) bei Aktivierung des Weiterleitungsknotens (RN).

4. Mobilkommunikationssystem nach Anspruch 2, wobei
die Zuweisungseinheit (22) konfiguriert zum Zuweisen der Zellidentität, welche eine Zelle untergeordnet des Funkweiterleitungsknoten (RN) identifiziert, in einem Einstellprozess für eine S1-Verbindung des Weiterleitungsknotens (RN) bei Aktivierung des Weiterleitungsknotens (RN).

5. Mobilkommunikationssystem nach Anspruch 2, wobei
der Weiterleitungsknoten (RN) eine Übertragungseinheit (23) umfasst, konfiguriert zum Benachrichtigen, bei Aktivierung, der Funkbasisstation (DeNB) über die Zahl von Zellen, welche in dem Weiterleitungsknoten (RN) operieren, und
die Zuweisungseinheit (22) konfiguriert ist zum Zuweisen der Zellidentitäten durch im Maximum die Zahl der benachrichtigten Zellen.

6. Mobilkommunikationssystem nach Anspruch 2, wobei
der Weiterleitungsknoten (RN) eine Übertragungseinheit (23) umfasst, konfiguriert zum Benachrichtigen, bei Aktivierung, der Funkbasisstation (DeNB) über die Zahl von Zellen, welche in dem Weiterleitungsknoten (RN) unterstützt werden können, und
die Zuweisungseinheit (22) konfiguriert zum Zuweisen der Zellidentität durch im Maximum einer Zahl kleiner oder gleich der Zahl der benachrichtigten Zellen.

7. Funkbasisstation (DeNB), verbunden mit einem Weiterleitungsknoten (DeNB), **gekennzeichnet durch** eine Zuweisungseinheit (22), konfiguriert zum Zuweisen, bei Aktivierung des Weiterleitungsknotens (RN), einer Zellidentität, welche eine Zelle untergeordnet des Weiterleitungsknotens (RN) identifiziert, zum Vermeiden eines Überlapps mit einer Zellidentität, welche Zellen untergeordnet anderer Weiterleitungsknoten, verbunden mit der Funkbasisstation (DeNB), identifiziert und einer Zellidentität verwendet als eine Zellidentität, welche eine Zelle untergeordnet der Funkbasisstation (DeNB) identifiziert, wobei
die Zellidentität, die eine Zelle untergeordnet des Weiterleitungsknotens (RN) identifiziert, konfiguriert ist durch
- einer Macro eNB ID, welche den Weiterleitungsknoten (RN) identifiziert und, welche identisch ist mit der Macro eNB ID, welche die Funkbasisstation (DeNB) identifiziert und
- eine ID, welche eine Zelle in der Funkbasisstation (DeNB) oder in dem Weiterleitungsknoten (RN) eindeutig identifizieren kann.

8. Funkbasisstation (DeNB) nach Anspruch 7, wobei
die Zuweisungseinheit (22) konfiguriert ist zum Zuweisen der Zellidentität, welche eine Zelle untergeordnet des Weiterleitungsknotens (RN) identifiziert, in einem Einstellprozess für eine RRC-Verbindung zwischen dem Weiterleitungsknoten (RN) und der Funkbasisstation (DeNB) bei Aktivierung des Weiterleitungsknotens (RN).

9. Funkbasisstation (DeNB) nach Anspruch 7, wobei
die Zuweisungseinheit (22) konfiguriert zum Zuweisen der Zellidentität, welche eine Zelle untergeordnet des Funkweiterleitungsknoten (RN) identifiziert, in einem Einstellprozess für eine S1-Verbindung des Weiterleitungsknotens (RN) bei Aktivierung des Weiterleitungsknotens (RN).

10. Funkbasisstation (DeNB) nach Anspruch 7, umfassend
eine Empfangseinheit (21), konfiguriert zum Empfangen, bei Aktivierung des Weiterleitungsknotens (RN), der Zahl von Zellen, welche in dem Weiterleitungsknoten (RN) operieren, wobei
die Zuweisungseinheit (22) konfiguriert ist zum Zuweisen der Zellidentitäten durch im Maximum die Zahl der benachrichtigten Zellen.

11. Funkbasisstation (DeNB) nach Anspruch 7, umfassend
eine Empfangseinheit (21), welche konfiguriert ist zum Empfangen, bei Aktivierung des Weiterleitungsknotens (RN), der Zahl von Zellen, welche in dem Weiterleitungsknoten (RN) unterstützt werden können, wobei
die Zuweisungseinheit (22) konfiguriert zum Zuweisen der Zellidentität durch im Maximum einer Zahl kleiner oder gleich der Zahl der benachrichtigten Zellen.

12. Weiterleitungsknoten (RN), verbunden mit einer Funkbasisstation (DeNB), wobei
der Weiterleitungsknoten (RN) **gekennzeichnet ist dadurch**, dass er konfiguriert ist zum Verwenden
- einer Macro eNB ID, welche den Weiterleitungsknoten (RN) identifiziert und, welche identisch ist mit der Macro eNB ID, welche die Funkbasisstation (DeNB) identifiziert und
- eine ID, welche eine Zelle in der Funkbasisstation (DeNB) oder in dem Weiterleitungsknoten (RN) eindeutig identifizieren kann
zum Einstellen einer Zellidentität, welche eine Zelle untergeordnet des Funkweiterleitungsknotens (RN) identifiziert.

13. Weiterleitungsknoten (RN) nach Anspruch 12, wobei
der Weiterleitungsknoten (RN) konfiguriert ist zum Verwenden der Macro eNB ID, erlangt über SIB1-Broadcast in der Zelle untergeordnet der Funkbasisstation (DeNB), und der ID, beinhaltet in einer empfangenen RRC-Verbindungsneukonfigurierungsnachricht zum Einstellen der Zellidentität.

14. Weiterleitungsknoten (RN) nach Anspruch 12, wobei
der Weiterleitungsknoten (RN) konfiguriert ist zum Verwenden der Macro eNB ID, erlangt über SIB1-Broadcast in der Zelle untergeordnet der Funkbasisstation (DeNB) und der ID beinhaltet in einer empfangenen S1-Einstellantwortnachricht zum Einstellen der Zellidentität.

## Revendications

1. Système de communication mobile comprenant une station de base radio et un noeud de relais (RN) connecté à la station de base radio (DeNB), dans lequel le noeud de relais (RN) est **caractérisé en ce qu'**il est configuré pour utiliser
- un ID eNB Macro qui identifie le noeud de relais (RN) et qui est identique à l'ID eNB Macro qui identifie la station de base radio (DeNB) et
- un ID qui identifie de manière unique une cellule dans la station de base radio (DeNB) ou dans le noeud de relais (RN)
pour établir une Identité de Cellule qui identifie une cellule subordonnée au noeud de relais (RN).

2. Système de communication mobile selon la revendication 1, dans lequel
la station de base radio (DeNB) comprend une unité d'assignation (22) configurée pour assigner, à l'activation du noeud de relais (RN), l'Identité de Cellule qui identifie une cellule subordonnée au noeud de relais (RN) pour éviter le chevauchement avec une Identité de Cellule qui identifie des cellules subordonnées à d'autres noeuds de relais (RN) connectés à la station de base radio (DeNB) et une Identité de Cellule utilisée comme une Identité de Cellule qui identifie une cellule subordonnée à la station de base radio (DeNB).

3. Système de communication mobile selon la revendication 2, dans lequel
l'unité d'assignation (22) est configurée pour assigner l'Identité de Cellule qui identifie une cellule subordonnée au noeud de relais (RN) dans un processus d'établissement pour une connexion RRC entre le noeud de relais (RN) et la station de base radio (DeNB) à l'activation du noeud de relais (RN).

4. Système de communication mobile selon la revendication 2, dans lequel
l'unité d'assignation (22) est configurée pour assigner l'Identité de Cellule qui identifie une cellule subordonnée au noeud de relais (RN) dans un processus d'établissement pour une connexion S1 du noeud de relais (RN) à l'activation du noeud de relais (RN).

5. Système de communication mobile selon la revendication 2, dans lequel
le noeud de relais (RN) comprend une unité de transmission (23) configurée pour notifier, à l'activation, à la station de base radio (DeNB) le nombre de cellules fonctionnant dans le noeud de relais (RN), et
l'unité d'assignation (22) est configurée pour assigner les Identités de Cellules d'autant que le nombre des cellules notifiées.

6. Système de communication mobile selon la revendication 2, dans lequel,
le noeud de relais (RN) comprend une unité de transmission (23) configurée pour notifier, à l'activation, à la station de base radio (DeNB) le nombre de cellules qui peuvent être supportées dans le noeud de relais (RN), et
l'unité d'assignation (22) est configurée pour assigner l'Identité de Cellule d'autant qu'un nombre inférieur ou égal au nombre des cellules notifiées.

7. Station de base radio (DeNB) connectée à un noeud de relais (RN), **caractérisée par** une unité d'assignation (22) configurée pour assigner, à l'activation du noeud de relais (RN), une Identité de Cellule qui identifie une cellule subordonnée au noeud de relais (RN) pour éviter le chevauchement avec une Identité de Cellule qui identifie des cellules subordonnées à d'autres noeuds de relais connectés à la station de base radio (DeNB) et une Identité de Cellule utilisée comme une Identité de Cellule qui identifie une cellule subordonnée à la station de base radio (DeNB),
dans laquelle
l'Identité de Cellule qui identifie une cellule subordonnée au noeud de relais (RN) est configurée par
- un ID eNB Macro qui identifie le noeud de relais (RN) et qui est identique à l'ID eNB Macro qui identifie la station de base radio (DeNB) et
- un ID qui identifie de manière unique une cellule dans la station de base radio (DeNB) ou dans le noeud de relais (RN).

8. Station de base radio (DeNB) selon la revendication 7, dans laquelle
l'unité d'assignation (22) est configurée pour assigner l'Identité de Cellule qui identifie une cellule subordonnée au noeud de relais (RN) dans un processus d'établissement pour une connexion RRC entre le noeud de relais (RN) et la station de base radio (DeNB) à l'activation du noeud de relais (RN).

9. Station de base radio (DeNB) selon la revendication 7, dans laquelle
l'unité d'assignation (22) est configurée pour assigner l'Identité de Cellule qui identifie une cellule subordonnée au noeud de relais (RN) dans un processus d'établissement pour une connexion S1 du noeud de relais (RN) à l'activation du noeud de relais (RN).

10. Station de base radio (DeNB) selon la revendication 7, comprenant une unité de réception (21) configurée pour recevoir, à l'activation du noeud de relais (RN), le nombre de cellules fonctionnant dans le noeud de relais (RN), dans laquelle
l'unité d'assignation (22) est configurée pour assigner les Identités de Cellules d'autant que le nombre des cellules notifiées.

11. Station de base radio (DeNB) selon la revendication 7, comprenant une unité de réception (21) configurée pour recevoir, à l'activation du noeud de relais (RN), le nombre de cellules qui peuvent être supportées dans le noeud de relais (RN), dans laquelle
l'unité d'assignation (22) est configurée pour assigner l'Identité de Cellule d'autant qu'un nombre inférieur ou égal au nombre des cellules notifiées.

12. Noeud de relais (RN) connecté à une station de base radio (DeNB), dans lequel
le noeud de relais (RN) est **caractérisé en ce qu'**il est configuré pour utiliser
- un ID eNB Macro qui identifie le noeud de relais (RN) et qui est identique à l'ID eNB Macro qui identifie la station de base radio (DeNB) et
- un ID qui identifie de manière unique une cellule dans la station de base radio (DeNB) ou dans le noeud de relais (RN)
pour établir une Identité de Cellule qui identifie une cellule subordonnée au noeud de relais (RN).

13. Noeud de relais (RN) selon la revendication 12, dans lequel
le noeud de relais (RN) est configuré pour utiliser l'ID eNB Macro acquis via une diffusion SIB1 dans la cellule subordonnée à la station de base radio (DeNB) et l'ID inclus dans un message de reconfiguration de connexion RRC reçu pour établir l'Identité de Cellule.

14. Noeud de relais (RN) selon la revendication 12, dans lequel
le noeud de relais (RN) est configuré pour utiliser l'ID eNB Macro acquis via une diffusion SIB1 dans la cellule subordonnée à la station de base radio (DeNB) et l'ID inclus dans un message de réponse d'établissement S1 reçu pour établir l'Identité de Cellule.
